# EUROPÄISCHE PATENTSCHRIFT

(11) **EP 3 351 787 B1**
(45) Veröffentlichungstag und Bekanntmachung des Hinweises auf die Patenterteilung: **06.03.2024**
(21) Anmeldenummer: 17202073.7
(22) Anmeldetag: 16.11.2017
(51) Int. Cl.: F02N 5/04, B60K 6/387, F16D 48/06, B60W 20/40, B60W 10/02, B60W 10/06, B60W 10/08, B60W 30/186, B60K 6/26, B60K 6/48

(54) **VERFAHREN ZUM BETREIBEN EINER ANTRIEBSEINRICHTUNG FÜR EIN KRAFTFAHRZEUG SOWIE ENTSPRECHENDE ANTRIEBSEINRICHTUNG**
METHOD FOR OPERATING A DRIVE DEVICE FOR A MOTOR VEHICLE AND CORRESPONDING DRIVE DEVICE
PROCÉDÉ DE FONCTIONNEMENT D'UN DISPOSITIF D'ENTRAÎNEMENT POUR VÉHICULE AUTOMOBILE ET DISPOSITIF D'ENTRAÎNEMENT CORRESPONDANT

(30) Priorität: 23.01.2017 DE 102017200981
(43) Veröffentlichungstag der Anmeldung: 25.07.2018
(73) Patentinhaber: AUDI AG, 85045 Ingolstadt (DE)
(72) Erfinder: Schneider, Michael, 85134 Stammham (DE); Kaartometsä, Henrik, 85080 Gaimersheim (DE); Brückl, Bernhard, 85302 Gerolsbach (DE)

(56) Entgegenhaltungen:
- DE-A1-102015 122 280
- US-A1- 2006 009 325
- US-A1- 2014 222 270
- US-A1- 2015 203 104

## Beschreibung

Die Erfindung betrifft ein Verfahren zum Betreiben einer Antriebseinrichtung für ein Kraftfahrzeug, die eine Brennkraftmaschine oder eine elektrische Maschine aufweist, wobei eine Antriebswelle der Brennkraftmaschine mittels einer Schaltkupplung mit einer Maschinenwelle der elektrischen Maschine koppelbar ist, wobei die Schaltkupplung zum Starten der Brennkraftmaschine über einen Anschleppzeitraum auf ein Sollkupplungsdrehmoment eingestellt wird. Dabei ist vorgesehen, dass vor dem Starten eine während des Startens voraussichtlich in der Schaltkupplung anfallende Wärmemenge prädiziert und bei Überschreiten eines Grenzwerts durch die prädizierte Wärmemenge wenigstens ein das Starten beeinflussender Betriebsparameter der Antriebseinrichtung derart gewählt wird, dass die voraussichtlich anfallende Wärmemenge reduziert wird. Die Erfindung betrifft weiterhin eine Antriebseinrichtung für ein Kraftfahrzeug.

Die Antriebseinrichtung dient beispielsweise dem Antreiben eines Kraftfahrzeugs, insoweit also dem Bereitstellen eines auf das Antreiben des Kraftfahrzeugs gerichteten Drehmoments. Die Antriebseinrichtung verfügt über mehrere Antriebsaggregate, nämlich ein als Brennkraftmaschine ausgestaltetes erstes Antriebsaggregat und ein als elektrische Maschine ausgebildetes zweites Antriebsaggregat. Die Antriebseinrichtung liegt insoweit als Hybridantriebseinrichtung vor. Die Antriebseinrichtung verfügt beispielsweise über eine Ausgangswelle, die mit der Brennkraftmaschine und der elektrischen Maschine koppelbar ist.

Beispielsweise können die Brennkraftmaschine und/oder die elektrische Maschine über ein Gangwechselgetriebe mit der Ausgangswelle gekoppelt werden. Hierzu ist beispielsweise die Maschinenwelle der elektrischen Maschine mit einer Getriebeeingangswelle des Gangwechselgetriebes verbunden, vorzugsweise starr und/oder permanent. Eine Getriebeausgangswelle des Gangwechselgetriebes kann hingegen mit der Abtriebswelle gekoppelt werden, vorzugsweise starr und/oder permanent. Es kann jedoch auch vorgesehen sein, dass zwischen der Getriebeausgangswelle und der Abtriebswelle eine weitere Kupplung, insbesondere eine weitere Schaltkupplung, vorgesehen ist.

Die elektrische Maschine ist über die Schaltkupplung mit der Brennkraftmaschine koppelbar. Hierbei ist die Brennkraftmaschine durch Öffnen der Schaltkupplung vorzugsweise gleichzeitig sowohl von der elektrischen Maschine als auch von der Abtriebswelle entkoppelbar. Die Schaltkupplung weist mehrere Schaltzustände auf, wobei in einem ersten Schaltzustand der Schaltkupplung die Brennkraftmaschine beziehungsweise ihre Antriebswelle von der elektrischen Maschine beziehungsweise der Maschinenwelle der elektrischen Maschine entkoppelt und in einem zweiten Schaltzustand mit ihr gekoppelt ist. In dem zweiten Schaltzustand ist vorzugsweise eine schlupffreie Verbindung zwischen der Brennkraftmaschine und der elektrischen Maschine beziehungsweise zwischen der Antriebswelle und der Maschinenwelle hergestellt, also ohne Kupplungsschlupf der Schaltkupplung.

Zum Starten der Brennkraftmaschine ist es üblicherweise notwendig, diese anzuschleppen, insbesondere bis die Brennkraftmaschine eine bestimmte Drehzahl erreicht hat. Diese bestimmte Drehzahl kann zum Beispiel eine Mindestdrehzahl oder eine Leerlaufdrehzahl der Brennkraftmaschine sein. Unter der Mindestdrehzahl ist diejenige Drehzahl der Brennkraftmaschine zu verstehen, ab welcher diese selbsttätig, also ohne den Einfluss eines äußeren Drehmoments, insbesondere also auch bei vollständig geöffneter Schaltkupplung, ihre Drehzahl weiter erhöhen kann, vorzugsweise in Richtung der Leerlaufdrehzahl. Die Leerlaufdrehzahl ist hingegen eine Drehzahl, auf welche die Brennkraftmaschine eingestellt wird, wenn sie nicht zum Antreiben des Kraftfahrzeugs oder allgemeiner zum Bereitstellen eines Drehmoments verwendet wird. Die Leerlaufdrehzahl ist üblicherweise größer als die Mindestdrehzahl.

Das Anschleppen der Brennkraftmaschine erfolgt durch zumindest teilweises Schließen der Schaltkupplung, also dem Einstellen eines Sollkupplungsdrehmoments an der Schaltkupplung. Das Sollkupplungsdrehmoment ist dabei von Null verschieden, insbesondere größer als Null. Ein tatsächlich mittels der Schaltkupplung von der Maschinenwelle auf die Antriebswelle übertragenes Istkupplungsdrehmoment wird auf das Sollkupplungsdrehmoment eingestellt, beispielsweise steuernd und/oder regelnd. Entsprechend wird ein dem Sollkupplungsdrehmoment entsprechendes Drehmoment an der Brennkraftmaschine angelegt, sodass sich ihre Drehzahl erhöht.

Das zum Starten der Brennkraftmaschine verwendete Sollkupplungsdrehmoment wird über den Anschleppzeitraum an der Schaltkupplung eingestellt. Vorzugsweise wird das Sollkupplungsdrehmoment über den Anschleppzeitraum konstant gehalten. Am Ende des Anschleppzeitraums wird bevorzugt die Schaltkupplung vollständig geöffnet, um ein selbsttätiges Beschleunigen der Brennkraftmaschine zu ermöglichen. Der Anschleppzeitraum beschreibt insoweit denjenigen Zeitraum, über welchen hinweg die Drehzahl der Brennkraftmaschine mittels des über die Schaltkupplung übertragenen Drehmoments erhöht wird, wobei die Brennkraftmaschine am Ende des Anschleppzeitraums vorzugsweise die Mindestdrehzahl oder die Leerlaufdrehzahl aufweist, insbesondere genau.

Das Sollkupplungsdrehmoment ist üblicherweise derart gewählt, dass an der Schaltkupplung Kupplungsschlupf auftritt, die Drehzahl der Antriebswelle also von der Drehzahl der Maschinenwelle verschieden ist. Je nach Ausgestaltung der Schaltkupplung fällt hierdurch eine bestimmte Wärmemenge an. Insbesondere bei der Ausgestaltung der Schaltkupplung als trockene Schaltkupplung, also als Schaltkupplung ohne direkte Kühlung durch ein Kühlmedium, ist diese Wärmemenge von besonderer Bedeutung, weil sie das Verhalten der Schaltkupplung beeinflussen kann.

Aus der Druckschrift DE 10 2015 122 280 A1 ist eine Steuervorrichtung für Fahrzeuge bekannt. Diese umfasst einen Controller, der dazu ausgestaltet ist, eine Drehzahl einer Leistungsquelle zu erhöhen, wenn eine Bremse gedrückt wird und eine Gaspedalstellung einen vorbestimmten Wert oder mehr einnimmt, während ein Fahrzeug stoppt, und danach, wenn die Bremse losgelassen wird, eine Mehrzahl von Eingriffeinheiten zum Übertragen einer Leistung in Eingriff zu bringen und das Fahrzeug zu starten. Der Controller umfasst: eine Parametererlangungseinheit, die dazu ausgestattet ist, einen Parameter zu erlangen, der eine angeforderte Beschleunigung beim Beschleunigen des Fahrzeugs anzeigt; und eine Schlupfsteuereinheit, die dazu ausgestaltet ist, eine Schlupfsteuerung an wenigstens einer aus der Mehrzahl von Eingriffseinheiten derart durchzuführen, dass zwischen durch Reibschluss eingreifenden Elementen eine Differenz der Drehzahl auftritt, und eine Anzahl der Eingriffeinheiten, an denen die Schlupfsteuerung durchgeführt wird, übereinstimmend mit einem Wert des erlangten Parameters einzustellen, wenn das Fahrzeug startet.

Aus der Druckschrift US 2006/0009325 A1 ist eine Start-Stopp-Automatik für ein Fahrzeug bekannt. Dabei schaltet eine Steuereinheit das Antriebsaggregat ab, wenn die Abschaltbedingungen erfüllt sind, und startet das Antriebsaggregat durch die Betätigung einer Kupplung, wenn die Startbedingungen erfüllt sind. Dabei ist die Steuereinheit dazu ausgebildet, die während des Starts des Antriebsaggregats in der Kupplung anfallende Wärmemenge abzuschätzen und, wenn die abgeschätzte Wärmemenge unterhalb eines Schwellenwerts liegt, ein folgendes Abschalten des Antriebsaggregats erlaubt, und, wenn die abgeschätzte Wärmemenge über dem ersten Schwellenwert und gleich oder niedriger als ein zweiter Schwellenwert ist, ein folgendes Abschalten des Antriebsaggregats erlaubt, und, wenn die abgeschätzte Wärmemenge über dem zweiten Schwellenwert liegt, ein folgendes Abschalten des Antriebsaggregats unterbindet.

Weiterhin ist aus dem Stand der Technik die Druckschrift US 2014/0222270 A1 bekannt.

Aus der Druckschrift US 2015/203104 A1 ist die Präambel der unabhängigen Ansprüche bekannt.

Es ist Aufgabe der Erfindung, ein Verfahren zum Betreiben einer Antriebseinrichtung für ein Kraftfahrzeug vorzuschlagen, welches gegenüber bekannten Verfahren Vorteile aufweist, insbesondere einen negativen Einfluss des Startens der Brennkraftmaschine auf die Schaltkupplung vermeidet.

Dies wird erfindungsgemäß mit einem Verfahren mit den Merkmalen des Anspruchs 1 erreicht. Dabei ist vorgesehen, dass als ein Starten beeinflussender Betriebsparameter der Antriebseinrichtung das Sollkupplungsdrehmoment verwendet wird, wobei zum Reduzieren der voraussichtlich anfallenden Wärmemenge eine Dauer des Anschleppzeitraums durch eine Erhöhung des Sollkupplungsdrehmoments verkürzt wird.

Grundsätzlich ist vorgesehen, dass vor dem Starten eine während des Startens voraussichtlich in der Schaltkupplung anfallende Wärmemenge prädiziert und bei Überschreiten eines Grenzwerts durch die prädizierte Wärmemenge wenigstens ein das Starten beeinflussender Betriebsparameter der Antriebseinrichtung derart gewählt wird, dass die voraussichtlich anfallende Wärmemenge reduziert wird.

Vor dem Starten der Brennkraftmaschine, also bereits vor dem Einstellen der Schaltkupplung auf das Sollkupplungsdrehmoment, wird die Wärmemenge prädiziert. Dies erfolgt auf Grundlage wenigstens einer Betriebsgröße und/oder wenigstens einer Zustandsgröße der Antriebseinrichtung und/oder einer Zustandsgröße der Außenumgebung. Die prädizierte Wärmemenge entspricht derjenigen Wärmemenge, welche voraussichtlich während des Startens der Brennkraftmaschine unter Verwendung bestimmter Betriebsparameter anfallen würde.

Überschreitet die prädizierte Wärmemenge den Grenzwert, so soll das Starten der Brennkraftmaschine beeinflusst werden, nämlich durch eine Veränderung des wenigstens einen Betriebsparameters. Der wenigstens eine Betriebsparameter soll entsprechend derart ausgehend von einem Ausgangswert verändert werden, dass die voraussichtlich anfallende Wärmemenge, also insoweit die prädizierte Wärmemenge, reduziert wird. Entsprechend kann auch davon ausgegangen werden, dass die während des Startens tatsächlich anfallende Wärmemenge geringer ist als bei der Verwendung des ursprünglichen Betriebsparameters.

Eine weitere Ausgestaltung der Erfindung sieht vor, dass die Wärmemenge aus wenigstens einer der folgenden Größen ermittelt wird: Die Dauer des Anschleppzeitraums, dem Sollkupplungsdrehmoment, einer Drehzahldifferenz zwischen einer Drehzahl der Antriebswelle und einer Drehzahl der Maschinenwelle, einem Kraftstoffdruck, einem prädizierten Drehzahlgradient der Drehzahl der Antriebswelle während des Startens und einem Startmodus der Brennkraftmaschine. Es kann vorgesehen sein, dass die Wärmemenge aus lediglich einer einzigen dieser Größen bestimmt wird. Bevorzugt ist jedoch die Verwendung mehrerer, also wenigstens zweier der Größen oder aller genannten Größen.

Unter der Dauer des Anschleppzeitraums ist die Länge des Anschleppzeitraums zu verstehen. Das Sollkupplungsdrehmoment ist das an der Schaltkupplung während des Anschleppzeitraums eingestellte Sollkupplungsdrehmoment. Die Drehzahldifferenz zwischen der Drehzahl der Antriebswelle und der Drehzahl der Maschinenwelle ist diejenige Drehzahldifferenz, welche vor dem Starten vorliegt, also bei vollständig geöffneter Schaltkupplung. Der Kraftstoffdruck ist der Druck des zum Betreiben der Brennkraftmaschine verwendeten Kraftstoffs, also beispielsweise der Druck in einem Kraftstoffrail der Brennkraftmaschine. Je höher der Kraftstoffdruck ist, umso schneller kann das Starten der Brennkraftmaschine erfolgen, umso kürzer ist also der Anschleppzeitraum.

Der prädizierte Drehzahlgradient ist der Gradient der Drehzahl der Antriebswelle über der Zeit während des Startens der Brennkraftmaschine. Er ergibt sich beispielsweise aus dem Sollkupplungsdrehmoment, liegt also als Funktion von diesem vor. Der Startmodus der Brennkraftmaschine beschreibt beispielsweise, ob das Starten der Brennkraftmaschine befeuert oder unbefeuert erfolgt. Während des befeuerten Startens wird während des Anschleppens der Brennkraftmaschine während des Anschleppzeitraums zumindest zeitweise Kraftstoff in die Brennkraftmaschine eingebracht und gezündet. Für das unbefeuerte Starten wird dagegen die Brennkraftmaschine zunächst während des Anschleppzeitraums auf eine bestimmte Drehzahl angeschleppt und erst nachfolgend Kraftstoff eingebracht und gezündet.

Eine Weiterbildung der Erfindung sieht vor, dass zum Reduzieren der voraussichtlich anfallenden Wärmemenge zusätzlich eine der folgenden Grö-βen angepasst wird: Die Dauer des Anschleppzeitraums, das Sollkupplungsdrehmoment, die Drehzahldifferenz zwischen der Drehzahl der Antriebswelle und der Drehzahl der Maschinenwelle, der Kraftstoffdruck, der prädizierte Drehzahlgradient der Drehzahl der Antriebswelle während des Startens. Die Größe beziehungsweise die Größen, anhand welcher beziehungsweise welchen die Wärmemenge ermittelt wird, wird insoweit auch gezielt zum Reduzieren der Wärmemenge gewählt beziehungsweise verändert.

Die Erfindung sieht vor, dass zum Reduzieren der voraussichtlich anfallenden Wärmemenge die Dauer des Anschleppzeitraums durch eine Erhöhung des Sollkupplungsdrehmoments verkürzt wird. Je länger über die Schaltkupplung ein Drehmoment zum Anschleppen der Brennkraftmaschine übertragen werden muss, desto größer ist die in beziehungsweise an der Schaltkupplung anfallende Wärmemenge. Entsprechend soll das Sollkupplungsdrehmoment erhöht werden, sodass sich die Dauer des Anschleppzeitraums verringert und mithin auch die Wärmemenge kleiner wird.

Eine bevorzugte weitere Ausgestaltung der Erfindung sieht vor, dass zum Reduzieren der voraussichtlich anfallenden Wärmemenge die Drehzahldifferenz durch eine Begrenzung der Drehzahl der Maschinenwelle auf eine Grenzdrehzahl verringert wird. Die Drehzahl der Antriebswelle ist vor dem Starten kleiner als die Drehzahl der Maschinenwelle, insbesondere ist sie - bei stillstehender Brennkraftmaschine - gleich Null. Soll die Brennkraftmaschine jedoch gestartet werden, während sie gerade ausläuft, so kann ihre Drehzahl durchaus von Null verschieden sein. In jedem Fall ist die Drehzahl der Antriebswelle beziehungsweise der Brennkraftmaschine nicht unmittelbar beeinflussbar. Aus diesem Grund muss zum Verringern der Drehzahldifferenz die Drehzahl der Maschinenwelle beziehungsweise die Drehzahl der elektrischen Maschine beeinflusst werden. Dies geschieht, indem die Drehzahl der Maschinenwelle auf die Grenzdrehzahl nach oben begrenzt wird.

Die Drehzahl der Maschinenwelle darf insoweit die Grenzdrehzahl nicht überschreiten.

Eine weitere Ausgestaltung der Erfindung sieht vor, dass die Grenzdrehzahl anhand wenigstens einer der folgenden Größen ermittelt wird: dem Sollkupplungsdrehmoment, einer Temperatur, einer Drehwinkelstellung einer Kurbelwelle der Brennkraftmaschine, der Dauer des Anschleppzeitraums, einem Synchronisierungszustand der Brennkraftmaschine und dem Kraftstoffdruck. Die Grenzdrehzahl liegt insoweit als Funktion genau einer der genannten Größen, mehrerer der genannten Größen oder aller der genannten Größen vor. Die Beschränkung der Drehzahl der Maschinenwelle auf die Grenzdrehzahl bedeutet eine Einschränkung der Fahrleistungen des Kraftfahrzeugs und soll insoweit so gering als möglich gehalten werden.

Entsprechend wird die Grenzdrehzahl nicht konstant festgelegt, sondern vielmehr in Abhängigkeit von wenigstens einer der Größen variabel ermittelt. Das Sollkupplungsdrehmoment ist das für das Starten der Brennkraftmaschine notwendige Kupplungsdrehmoment, also insoweit das voraussichtlich während des Startens herangezogene Sollkupplungsdrehmoment. Die Temperatur beschreibt beispielsweise eine Temperatur der Brennkraftmaschine, insbesondere entspricht sie einer Schmiermitteltemperatur oder einer Kühlmitteltemperatur, oder eine Temperatur der Schaltkupplung, welche das zum Starten der Brennkraftmaschine notwendige Sollkupplungsdrehmoment beeinflusst. Selbiges gilt auch für die Drehwinkelstellung der Kurbelwelle der Brennkraftmaschine.

Auch die Dauer des Anschleppzeitraums kann Eingang in die Ermittlung der Grenzdrehzahl finden. Diese Dauer hängt im Wesentlichen von dem Synchronisierungszustand der Brennkraftmaschine und dem Kraftstoffdruck ab. Unter der Synchronisation der Brennkraftmaschine ist eine Zuordnung von Kraftstoffeinspritzung und Zündung für wenigstens einen Zylinder, insbesondere alle Zylinder, der Brennkraftmaschine zu verstehen. Der Synchronisierungszustand beschreibt insoweit, ob eine solche Synchronisation vorliegt oder ob dies nicht der Fall ist.

Eine bevorzugte weitere Ausgestaltung der Erfindung sieht vor, dass zum Reduzieren der voraussichtlich anfallenden Wärmemenge der Drehzahlgradient der Drehzahl der Antriebswelle durch eine Erhöhung des Sollkupplungsdrehmoments und/oder durch eine Vergrößerung der Dauer des Anschleppzeitraums vergrößert wird. Durch eine weitere Maßnahme zum Reduzieren der Wärmemenge während des Startens der Brennkraftmaschine kann der Drehzahlgradient vergrößert werden. Dies erfolgt insbesondere durch eine Erhöhung des Sollkupplungsdrehmoments und/oder eine Verkürzung der Dauer des Anschleppzeitraums, auf welche vorstehend bereits hingewiesen wurde. Besonders bevorzugt werden beide Maßnahmen durchgeführt, also sowohl das Sollkupplungsdrehmoment erhöht als auch die Dauer des Anschleppzeitraums verkürzt.

Zum Reduzieren der voraussichtlich anfallenden Wärmemenge wird erfindungsgemäß ein bestimmter Startmodus aus mehreren Startmodi ausgewählt und zum Starten der Brennkraftmaschine angewandt. Die Startmodi können nach der bei ihrer Durchführung anfallenden Wärmemenge in der Schaltkupplung klassifiziert beziehungsweise sortiert werden. Beispielsweise ist es vorgesehen, alle Startmodi von der Durchführung auszuschließen, für welche die bei ihrer Anwendung prädizierte Wärmemenge den Grenzwert überschreitet. Zugelassen werden insoweit nur Startmodi, deren prädizierte Wärmemenge höchstens dem Grenzwert entsprechen oder vorzugsweise kleiner sind als dieser.

Schließlich kann im Rahmen einer weiteren Ausführungsform der Erfindung vorgesehen sein, dass als Startmodi ein unbefeuerter Schlupfstart, ein unbefeuerter Schleppstart, ein befeuerter Schleppstart und/oder ein befeuerter Schleppstart verwendet werden. Aus den genannten Startmodi beziehungsweise wenigstens zweien der Startmodi wird wie vorstehend beschrieben der bestimmte Startmodus ausgewählt und zum Starten der Brennkraftmaschine herangezogen. Unter dem Schlupfstart ist ein Start der Brennkraftmaschine, bei welchem die Schaltkupplung derart eingestellt wird, dass an ihr Kupplungsschlupf auftritt. Der Schleppstart ist dagegen ein Start, der ohne Kupplungsschlupf an der Schaltkupplung durchgeführt wird.

Eine Weiterbildung der Erfindung sieht vor, dass das zum Starten der Brennkraftmaschine verwendete, an der Schaltkupplung einzustellende Kupplungssolldrehmoment aus einer Temperatur und/oder einer - insbesondere im Stillstand der Brennkraftmaschine vorliegenden - Kurbelwellenstellung der Brennkraftmaschine ermittelt wird. Das Kupplungssolldrehmoment ist das Drehmoment, welches mittels der Schaltkupplung übertragen werden soll. Ein tatsächlich über die Schaltkupplung übertragenes Kupplungsistdrehmoment wird vorzugsweise auf das Kupplungssolldrehmoment eingestellt, insbesondere steuernd und/oder regelnd.

Das Kupplungssolldrehmoment wird nun anhand der Temperatur und/oder der Kurbelwellenstellung der Brennkraftmaschine bestimmt. Beispielsweise ist das Kupplungssolldrehmoment umso höher, je niedriger die Temperatur ist. Als Temperatur wird beispielsweise eine Brennkraftmaschinentemperatur der Brennkraftmaschine, beispielsweise eine Schmiermitteltemperatur, herangezogen. Zusätzlich oder alternativ wird die Kurbelwellenstellung herangezogen, welche vor dem Starten, insbesondere im Stillstand der Brennkraftmaschine, vorliegt.

Die Kurbelwellenstellung beschreibt beispielsweise einen Drehwinkel, um welchen die Kurbelwelle der Brennkraftmaschine gedreht werden muss, bis für denjenigen Zylinder der obere Totpunkt erreicht ist, in welchem zuerst eine Verdichtung und/oder Kraftstoffeinspritzung vorgenommen wird. Bei kleinem Drehwinkel muss weniger Gemisch verdichtet werden als bei gro-βem Drehwinkel, weil der erste zu befeuernde Zylinder kurz vor seinem oberen Totpunkt steht. Entsprechend wird das Kupplungssolldrehmoment umso kleiner gewählt, je kleiner der Drehwinkel ist.

Eine weitere bevorzugte Ausgestaltung der Erfindung sieht vor, dass das Kupplungssolldrehmoment nach oben korrigiert wird, wenn die Drehzahl der Brennkraftmaschine zu Beginn des Startens größer als Null ist oder eine Zeitspanne nach einem Abstellen eine Vorgabezeitspanne unterschreitet, wobei das Kupplungssolldrehmoment umso größer gewählt wird, je weiter die Zeitspanne die Vorgabezeitspanne unterschreitet. Vorstehend wurde bereits dargelegt, dass das Starten der Brennkraftmaschine aus einer beliebigen Ausgangsdrehzahl heraus erfolgen kann. Liegt ein dem Starten vorhergehendes Abstellen der Brennkraftmaschine erst kurze Zeit zurück, ist die Drehzahl größer als Null. Entsprechend liegt in dem nächsten Zylinder, in welchem eine Verdichtung vorgenommen werden soll, bereits ein vorverdichtetes Gemisch vor.

Dies macht eine Erhöhung des Kupplungssolldrehmoments notwendig. Beispielsweise erfolgt die Erhöhung des Kupplungssolldrehmoments innerhalb eines bestimmten Drehzahlbereichs der Brennkraftmaschine. Dieser Drehzahlbereich weist als untere Grenze beispielsweise eine Drehzahl von größer als Null, insbesondere infinitesimal größer als Null, auf, bei welcher sich die Brennkraftmaschine bei ihrem Auslaufen gerade noch in Bewegung befindet. Als obere Grenze kann der Drehzahlbereich eine Drehzahl aufweisen, die kleiner ist als die Mindestdrehzahl und/oder die Leerlaufdrehzahl. Insbesondere beträgt die Drehzahl höchstens 75 %, höchstens 50 %, höchstens 40 %, höchstens 30 % oder höchstens 25 % der Mindestdrehzahl. Überschreitet die Drehzahl der Brennkraftmaschine den Drehzahlbereich, liegt also oberhalb von diesem, so kann auf das Erhöhen des Kupplungssolldrehmoments verzichtet werden, weil die noch rotierenden Massen der Brennkraftmaschine das Starten unterstützen.

Ist beim Auslaufen der Brennkraftmaschine eine Drosselklappe geöffnet, so werden die Zylinder der Brennkraftmaschine noch mit der vollen Luftfüllung versorgt. Entsprechend liegt eine vorverdichtete Luftfüllung in dem ersten zu verdichtenden Zylinder vor. Diese erhöhte Füllung wird nach Stehenbleiben der Brennkraftmaschine langsam über Undichtigkeiten des Zylinders, beispielsweise der Zylinderdichtungen, abgebaut. Die erhöhte Füllung im ersten zu verdichtenden Zylinder soll bei der Berechnung des Kupplungssolldrehmoments berücksichtigt werden. Entsprechend wird die Zeitspanne nach einem dem Starten vorhergehenden Abstellen berücksichtigt und das Kupplungssolldrehmoment nach oben korrigiert, wenn die Zeitspanne die Vorgabezeitspanne unterschreitet. Es ist hierbei vorgesehen, dass das Kupplungssolldrehmoment umso größer gewählt wird, je weiter die Zeitspanne die Vorgabezeitspanne unterschreitet. Beispielsweise wird das Kupplungssolldrehmoment linear über der Zeit nach dem Abstellen der Brennkraftmaschine reduziert.

Eine weitere Ausführungsform der Erfindung sieht vor, dass ein mittels der elektrischen Maschine bereitstellbares Antriebsdrehmoment auf einen Drehmomentgrenzwert begrenzt wird, der aus einem maximalen Antriebsdrehmoment der elektrischen Maschine und einer Drehmomentreserve ermittelt wird. Das Maximalantriebsdrehmoment entspricht dem maximalen mittels der elektrischen Maschine bereitstellbaren Drehmoment. Das Maximalantriebsdrehmoment entspricht dabei vorzugsweise einem Nenndrehmoment, bei welchem die elektrische Maschine dauerhaft und durchgehend betrieben werden kann.

Aus dem Maximalantriebsdrehmoment und der Drehmomentreserve wird der Drehmomentgrenzwert bestimmt. Der Drehmomentgrenzwert entspricht hierbei dem Maximalantriebsdrehmoment abzüglich der Drehmomentreserve. Durch das Vorsehen der Drehmomentreserve wird sichergestellt, dass stets ein zuverlässiges Starten der Brennkraftmaschine mithilfe der elektrischen Maschine möglich ist. Entsprechend wird das Antriebsdrehmoment, welches von der elektrischen Maschine erzeugt werden kann, auf den Drehmomentgrenzwert begrenzt.

Im Rahmen einer weiteren vorteilhaften Ausführungsform der Erfindung ist vorgesehen, dass die Drehmomentreserve aus einem zum Starten der Brennkraftmaschine benötigten Anschleppdrehmoment ermittelt wird. Das Anschleppdrehmoment entspricht dem Drehmoment, welches zum Anschleppen der Brennkraftmaschine benötigt wird, insbesondere zum Anschleppen auf die Mindestdrehzahl und/oder die Leerlaufdrehzahl. Die Drehmomentreserve wird nun beispielsweise gleich dem Anschleppdrehmoment gesetzt.

Eine weitere Ausgestaltung der Erfindung sieht vor, dass die Drehmomentreserve gleich dem Anschleppdrehmoment gesetzt wird, wenn ein Istdrehmoment der elektrischen Maschine kleiner ist als ein Maximalantriebsdrehmoment abzüglich dem Anschleppdrehmoment, und ansonsten gleich dem Maximalantriebsdrehmoment minus dem Istdrehmoment gesetzt und anschließend erhöht wird. Somit kann die Drehmomentreserve für den Fahrer des Kraftfahrzeugs unmerklich bereitgestellt werden, nämlich indem die Drehmomentreserve zunächst derart gewählt wird, dass sie das Istdrehmoment nicht beeinflusst und anschließend langsam erhöht wird, sodass das Istdrehmoment der elektrischen Maschine langsam abnimmt.

Die Erfindung betrifft weiterhin eine Antriebseinrichtung für ein Kraftfahrzeug, insbesondere zur Durchführung des Verfahrens gemäß den vorstehenden Ausführungen, wobei die Antriebseinrichtung eine Brennkraftmaschine und eine elektrische Maschine aufweist und eine Antriebswelle der Brennkraftmaschine mittels einer Schaltkupplung mit einer Maschinenwelle der elektrischen Maschine koppelbar ist, wobei die Schaltkupplung zum Starten der Brennkraftmaschine über einen Anschleppzeitraum auf ein Sollkupplungsdrehmoment einstellbar ist. Dabei ist vorgesehen, dass die Antriebseinrichtung dazu ausgebildet ist, vor dem Starten eine während des Startens voraussichtlich in der Schaltkupplung anfallende Wärmemenge zu prädizieren und bei Überschreiten eines Grenzwerts durch die prädizierte Wärmemenge wenigstens einen das Starten beeinflussender Betriebsparameter der Antriebseinrichtung derart zu wählen, dass die voraussichtlich anfallende Wärmemenge reduziert wird. Dabei wird als ein das Starten beeinflussender Betriebsparameter der Antriebseinrichtung das Sollkupplungsdrehmoment verwendet, wobei zum Reduzieren der voraussichtlich anfallenden Wärmemenge eine Dauer des Anschleppzeitraums durch eine Erhöhung des Sollkupplungsdrehmoments verkürzt wird.

Auf die Vorteile einer derartigen Vorgehensweise beziehungsweise einer derartigen Ausgestaltung der Antriebseinrichtung wurde bereits eingegangen. Sowohl die Antriebseinrichtung als auch das Verfahren zu ihrem Betreiben können gemäß den vorstehenden Ausführungen weitergebildet sein, sodass insoweit auf diese verwiesen wird.

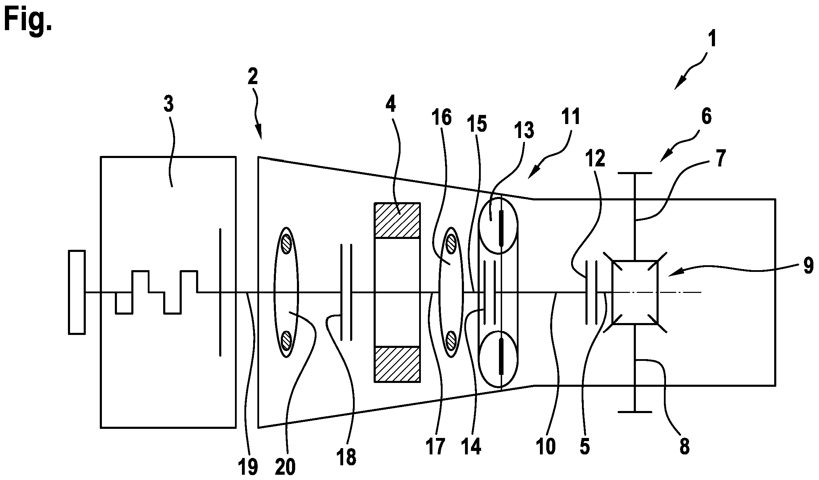

Die Erfindung wird nachfolgend anhand der in der Zeichnung dargestellten Ausführungsbeispiele näher erläutert, ohne dass eine Beschränkung der Erfindung erfolgt. Dabei zeigt die einzige
- Figur: eine schematische Darstellung eines Antriebsstrangs für ein Kraftfahrzeug.

Der Antriebsstrang 1 verfügt über eine Antriebseinrichtung 2, die wiederum eine Brennkraftmaschine 3, eine elektrische Maschine sowie eine Abtriebswelle 5 aufweist. Die Antriebseinrichtung 2 dient dem Antreiben wenigstens einer Radachse 6 des Kraftfahrzeugs, welche sich aus zwei Teilachsen 7 und 8 zusammensetzt, die über ein Differentialgetriebe 9 mit der Abtriebswelle 5 der Antriebseinrichtung 2 gekoppelt sind. Die Abtriebswelle 5 ist mit einer Getriebeausgangswelle 10 eines Gangwechselgetriebes 11 der Antriebseinrichtung 2 gekoppelt, insbesondere starr und/oder permanent und/oder mittels einer optionalen Schaltkupplung 12 koppelbar.

Das Gangwechselgetriebe 11 kann beispielsweise einen Drehmomentwandler 13 aufweisen, welcher über eine Wandlerüberbrückungskupplung 14 verfügen kann. Das Gangwechselgetriebe 11 verfügt über eine Getriebeeingangswelle 15, die vorzugsweise permanent mit dem Drehmomentwandler 13 gekoppelt ist. Die Getriebeeingangswelle 15 kann unmittelbar oder - wie hier dargestellt - über eine Dämpfungseinrichtung 16, beispielsweise einen Torsionsschwingungsdämpfer, mit einer Maschinenwelle 17 der elektrischen Maschine 4 gekoppelt sein, insbesondere starr und/oder permanent. Die elektrische Maschine 4 kann koaxial zu der Getriebeeingangswelle 15 und/oder der Getriebeausgangswelle 10 angeordnet sein.

Eine Wirkverbindung zwischen der Brennkraftmaschine 3 und der elektrischen Maschine 4 ist mittels einer Schaltkupplung 18 einstellbar. Die Schaltkupplung 18 liegt hierbei zwischen einer Antriebswelle 19 der Brennkraftmaschine 3 und der Maschinenwelle 17 der elektrischen Maschine 4 vor. In der Wirkverbindung zwischen der Brennkraftmaschine 3 und der Schaltkupplung 18 kann zudem eine weitere Dämpfungseinrichtung 20 optional vorgesehen sein. Die Dämpfungseinrichtung 20 ist vorzugsweise als Zweimassenschwungrad ausgeführt.

In einem ersten Schaltzustand der Schaltkupplung 18 ist die Brennkraftmaschine 3 von der elektrischen Maschine 4 entkoppelt. In einem zweiten Schaltzustand ist sie dagegen mit ihr gekoppelt. Entsprechend ist die Schaltkupplung 18 in dem ersten Schaltzustand geöffnet, insbesondere vollständig geöffnet, und in dem zweiten Schaltzustand wenigstens teilweise, vorzugsweise vollständig, geschlossen. Unter dem vollständigen Schließen kann ein Schließen der Schaltkupplung 18 mit oder ohne Kupplungsüberpressung verstanden werden.

Die Brennkraftmaschine 3 kann durch wenigstens teilweises Schließen der Schaltkupplung 3 angeschleppt und mithin gestartet werden. Das Anschleppen der Brennkraftmaschine 3 durch das Schließen der Schaltkupplung 3 erfolgt über den Anschleppzeitraum. Während dieses Anschleppzeitraums wird die Schaltkupplung 18 auf ein Sollkupplungsdrehmoment eingestellt. Dieses ist dabei vorzugsweise derart gewählt, dass Kupplungsschlupf in der Schaltkupplung 18 auftritt.

Vor dem Starten der Brennkraftmaschine 3 durch das Schließen der Schaltkupplung 18 wird nun eine während des Startens voraussichtlich in der Schaltkupplung 18 anfallende Wärmemenge prädiziert. Überschreitet diese prädizierte Wärmemenge einen Grenzwert, so wird wenigstens ein das Starten beeinflussender Betriebsparameter der Antriebseinrichtung 1 derart gewählt, dass die voraussichtlich anfallende Wärmemenge reduziert wird. Der Betriebsparameter wird dabei vorzugsweise auch zum Bestimmen der voraussichtlich anfallenden Wärmemenge herangezogen.

Beispielsweise ist es also vorgesehen, dass der Betriebsparameter zunächst einen Ausgangswert aufweist, anhand welchem die Wärmemenge prädiziert wird. Überschreitet diese den Grenzwert, so wird der Betriebsparameter ausgehend von dem Ausgangswert auf einen von diesem verschiedenen Wert verändert und das Prädizieren der Wärmemenge erneut durchgeführt. Dieser Vorgang wird wiederholt, bis die Wärmemenge höchstens dem Grenzwert entspricht oder kleiner ist als dieser. Anschließend wird das Starten der Brennkraftmaschine unter Verwendung des Betriebsparameters durchgeführt. Auf diese Art und Weise kann die während des Startens der Brennkraftmaschine 3 in der Schaltkupplung 18 anfallende Wärmemenge reduziert werden.

## Patentansprüche

1. Verfahren zum Betreiben einer Antriebseinrichtung (2) für ein Kraftfahrzeug, die eine Brennkraftmaschine (3) und eine elektrische Maschine (4) aufweist, wobei eine Antriebswelle (19) der Brennkraftmaschine (3) mittels einer Schaltkupplung (18) mit einer Maschinenwelle (17) der elektrischen Maschine (4) koppelbar ist, wobei die Schaltkupplung (18) zum Starten der Brennkraftmaschine (3) über einen Anschleppzeitraum auf ein Sollkupplungsdrehmoment eingestellt wird, wobei vor dem Starten eine während des Startens voraussichtlich in der Schaltkupplung (18) anfallende Wärmemenge prädiziert und bei Überschreiten eines Grenzwerts durch die prädizierte Wärmemenge wenigstens ein das Starten beeinflussender Betriebsparameter der Antriebseinrichtung (1) derart gewählt wird, dass die voraussichtlich anfallende Wärmemenge reduziert wird, wobei als ein das Starten beeinflussender Betriebsparameter der Antriebseinrichtung (1) das Sollkupplungsdrehmoment verwendet wird, wobei zum Reduzieren der voraussichtlich anfallenden Wärmemenge eine Dauer des Anschleppzeitraums durch eine Erhöhung des Sollkupplungsdrehmoments verkürzt wird, **dadurch gekennzeichnet, dass** zum Reduzieren der voraussichtlich anfallenden Wärmemenge zusätzlich ein Startmodus der Brennkraftmaschine (3) angepasst wird, wobei der Startmodus beschreibt, ob das Starten der Brennkraftmaschine (3) befeuert oder unbefeuert erfolgt, wobei das befeuerte Starten bedeutet, dass zumindest zeitweise Kraftstoff in die Brennkraftmaschine während des Anschleppzeitraums eingebracht und gezündet wird; und das unbefeuerte Starten bedeutet, dass die Brennkraftmaschine zunächst während des Anschleppzeitraums auf eine bestimmte Drehzahl angeschleppt und erst nachfolgend Kraftstoff eingebracht und gezündet wird.

2. Verfahren nach Anspruch 1, **dadurch gekennzeichnet, dass** die Wärmemenge aus wenigstens einer der folgenden Größen ermittelt wird: der Dauer des Anschleppzeitraums, dem Sollkupplungsdrehmoment, einer Drehzahldifferenz zwischen einer Drehzahl der Antriebswelle (19) und einer Drehzahl der Maschinenwelle (17), einem Kraftstoffdruck, einem prädizierten Drehzahlgradient der Drehzahl der Antriebswelle (19) während des Startens und der Startmodus der Brennkraftmaschine (3).

3. Verfahren nach einem der vorhergehenden Ansprüche, **dadurch gekennzeichnet, dass** zum Reduzieren der voraussichtlich anfallenden Wärmemenge zusätzlich eine der folgenden Größen angepasst wird: die Drehzahldifferenz zwischen der Drehzahl der Antriebswelle (19) und der Drehzahl der Maschinenwelle, der Kraftstoffdruck und der prädizierte Drehzahlgradient der Drehzahl der Antriebswelle (19) während des Startens.

4. Verfahren nach einem der vorhergehenden Ansprüche, **dadurch gekennzeichnet, dass** zum Reduzieren der voraussichtlich anfallenden Wärmemenge die Drehzahldifferenz durch eine Begrenzung der Drehzahl der Maschinenwelle (17) auf eine Grenzdrehzahl verringert wird.

5. Verfahren nach einem der vorhergehenden Ansprüche, **dadurch gekennzeichnet, dass** die Grenzdrehzahl anhand wenigstens einer der folgenden Größen ermittelt wird: dem Sollkupplungsdrehmoment, einer Temperatur, einer Drehwinkelstellung einer Kurbelwelle der Brennkraftmaschine, der Dauer des Anschleppzeitraums, einem Synchronisierungszustand der Brennkraftmaschine (3) und dem Kraftstoffdruck.

6. Verfahren nach einem der vorhergehenden Ansprüche, **dadurch gekennzeichnet, dass** zum Reduzieren der voraussichtlich anfallenden Wärmemenge der Drehzahlgradient der Drehzahl der Antriebswelle (19) durch eine Erhöhung des Sollkupplungsdrehmoments und/oder durch eine Verkürzung der Dauer des Anschleppzeitraums vergrößert wird.

7. Verfahren nach einem der vorhergehenden Ansprüche, **dadurch gekennzeichnet, dass** zum Reduzieren der voraussichtlich anfallenden Wärmemenge ein bestimmter Startmodus aus mehreren Startmodi ausgewählt und zum Starten der Brennkraftmaschine (3) angewandt wird.

8. Verfahren nach einem der vorhergehenden Ansprüche, **dadurch gekennzeichnet, dass** als Startmodi ein unbefeuerter Schlupfstart, ein unbefeuerter Schleppstart, ein befeuerter Schlupfstart und/oder ein befeuerter Schleppstart verwendet werden.

9. Antriebseinrichtung (2) für ein Kraftfahrzeug, insbesondere zur Durchführung des Verfahrens nach einem oder mehreren der vorhergehenden Ansprüche, wobei die Antriebseinrichtung (2) eine Brennkraftmaschine (3) und eine elektrische Maschine (4) aufweist, und eine Antriebswelle (19) der Brennkraftmaschine (3) mittels einer Schaltkupplung (18) mit einer Maschinenwelle (17) der elektrischen Maschine (4) koppelbar ist, wobei die Schaltkupplung (18) zum Starten der Brennkraftmaschine (3) über einen Anschleppzeitraum auf ein Sollkupplungsdrehmoment einstellbar ist, wobei die Antriebseinrichtung (2) dazu ausgebildet ist, vor dem Starten eine während des Startens voraussichtlich in der Startkupplung (18) anfallende Wärmemenge zu prädizieren und bei Überschreiten eines Grenzwerts durch die prädizierte Wärmemenge wenigstens einen das Starten beeinflussender Betriebsparameter der Antriebseinrichtung (2) derart zu wählen, dass die voraussichtlich anfallende Wärmemenge reduziert wird, wobei als ein das Starten beeinflussender Betriebsparameter der Antriebseinrichtung (1) das Sollkupplungsdrehmoment verwendet wird, wobei zum Reduzieren der voraussichtlich anfallenden Wärmemenge eine Dauer des Anschleppzeitraums durch eine Erhöhung des Sollkupplungsdrehmoments verkürzt wird, **dadurch gekennzeichnet, dass** zum Reduzieren der voraussichtlich anfallenden Wärmemenge zusätzlich ein Startmodus der Brennkraftmaschine (3) angepasst wird, wobei der Startmodus beschreibt, ob das Starten der Brennkraftmaschine (3) befeuert oder unbefeuert erfolgt, wobei das befeuerte Starten bedeutet, dass zumindest zeitweise Kraftstoff in die Brennkraftmaschine während des Anschleppzeitraums eingebracht und gezündet wird; und das unbefeuerte Starten bedeutet, dass die Brennkraftmaschine zunächst während des Anschleppzeitraums auf eine bestimmte Drehzahl angeschleppt und erst nachfolgend Kraftstoff eingebracht und gezündet wird.

## Claims

1. Method for operating a drive device (2) for a motor vehicle which has an internal combustion engine (3) and an electric machine (4), wherein a drive shaft (19) of the internal combustion engine (3) can be coupled to a machine shaft (17) of the electric machine (4) by means of a shift clutch (18), wherein for startup of the internal combustion engine (3), the shift clutch (18) is set to a desired clutch torque over a dragging period, wherein prior to startup, a quantity of heat expected to accrue in the shift clutch (18) during startup is predicted and, when the predicted quantity of heat exceeds a limit value, at least one operating parameter of the drive device (1) which influences the startup is selected in such a way that the quantity of heat expected to accrue is reduced, wherein the desired clutch torque is used as an operating parameter of the drive device (1) which influences the startup, wherein in order to reduce the quantity of heat expected to accrue, a duration of the dragging period is shortened by increasing the desired clutch torque, **characterised in that** in order to reduce the quantity of heat expected to accrue, a startup mode of the internal combustion engine (3) is additionally adjusted, wherein the startup mode describes whether the internal combustion engine (3) is started in a fired or unfired manner, wherein the fired startup means that fuel is at least temporarily introduced into the internal combustion engine during the dragging period and ignited; and the unfired startup means that the internal combustion engine is initially dragged to a specific speed during the dragging period and fuel is only subsequently introduced and ignited.

2. Method according to claim 1, **characterised in that** the quantity of heat is determined from at least one of the following values: the duration of the dragging period, the desired clutch torque, a difference in speed between a speed of the drive shaft (19) and a speed of the machine shaft (17), a fuel pressure, a predicted speed gradient of the speed of the drive shaft (19) during startup and the startup mode of the internal combustion engine (3).

3. Method according to any one of the preceding claims, **characterised in that,** in order to reduce the quantity of heat expected to accrue, one of the following values is additionally adjusted: the difference in speed between the speed of the drive shaft (19) and the speed of the machine shaft, the fuel pressure and the predicted speed gradient of the speed of the drive shaft (19) during startup.

4. Method according to any one of the preceding claims, **characterised in that,** in order to reduce the quantity of heat expected to accrue, the difference in speed is reduced by limiting the speed of the machine shaft (17) to a limit speed.

5. Method according to any one of the preceding claims, **characterised in that** the limit speed is determined on the basis of at least one of the following values: the desired clutch torque, a temperature, a rotational angle position of a crankshaft of the internal combustion engine, the duration of the dragging period, a synchronisation state of the internal combustion engine (3), and the fuel pressure.

6. Method according to any one of the preceding claims, **characterised in that,** in order to reduce the quantity of heat expected to accrue, the speed gradient of the speed of the drive shaft (19) is increased by increasing the desired clutch torque and/or by shortening the duration of the dragging period.

7. Method according to any one of the preceding claims, **characterised in that,** in order to reduce the quantity of heat expected to accrue, a specific startup mode is selected from a plurality of startup modes and is employed to start up the internal combustion engine (3).

8. Method according to any one of the preceding claims, **characterised in that** an unfired slip start, an unfired drag start, a fired slip start and/or a fired drag start are used as startup modes.

9. Drive device (2) for a motor vehicle, in particular for performing the method according to one or more of the preceding claims, wherein the drive device (2) has an internal combustion engine (3) and an electric machine (4), and a drive shaft (19) of the internal combustion engine (3) can be coupled to a machine shaft (17) of the electric machine (4) by means of a shift clutch (18), wherein for startup of the internal combustion engine (3), the shift clutch (18) can be set to a desired clutch torque over a dragging period, wherein the drive device (2) is designed to predict, prior to startup, a quantity of heat expected to accrue in the shift clutch (18) during startup and, when the predicted quantity of heat exceeds a limit value, to select at least one operating parameter of the drive device (2) which influences the startup in such a way that the quantity of heat expected to accrue is reduced, wherein the desired clutch torque is used as an operating parameter of the drive device (1) which influences the startup, wherein in order to reduce the quantity of heat expected to accrue, a duration of the dragging period is shortened by increasing the desired clutch torque, **characterised in that** in order to reduce the quantity of heat expected to accrue, a startup mode of the internal combustion engine (3) is additionally adjusted, wherein the startup mode describes whether the internal combustion engine (3) is started in a fired or unfired manner, wherein the fired startup means that fuel is at least temporarily introduced into the internal combustion engine during the dragging period and ignited; and the unfired startup means that the internal combustion engine is initially dragged to a specific speed during the dragging period and fuel is only subsequently introduced and ignited.

## Revendications

1. Procédé de fonctionnement d'un dispositif d'entraînement (2) pour un véhicule automobile, qui présente un moteur à combustion interne (3) et une machine électrique (4), dans lequel un arbre d'entraînement (19) du moteur à combustion interne (3) peut être couplé au moyen d'un embrayage (18) à un arbre de machine (17) de la machine électrique (4), dans lequel l'embrayage (18), pour le démarrage du moteur à combustion interne (3), est réglé pendant un temps de remorquage sur un couple d'embrayage de consigne, dans lequel, avant le démarrage, une quantité de chaleur qui devrait s'accumuler dans l'embrayage (18) pendant le démarrage est prédite et lorsqu'une valeur limite est dépassée par la quantité de chaleur prédite, au moins un paramètre de fonctionnement influençant le démarrage du dispositif d'entraînement (1) est sélectionné de telle sorte que la quantité de chaleur qui devrait s'accumuler est réduite, dans lequel le couple d'embrayage de consigne est utilisé en tant que paramètre de fonctionnement influençant le démarrage du dispositif d'entraînement (1), dans lequel, pour réduire la quantité de chaleur qui devrait s'accumuler, une durée du temps de remorquage est réduite par une augmentation du couple d'embrayage de consigne, **caractérisé en ce que**, pour réduire la quantité de chaleur qui devrait s'accumuler, un mode de démarrage du moteur à combustion interne (3) est de plus adapté, dans lequel le mode de démarrage décrit si le démarrage du moteur à combustion interne (3) a lieu en étant alimenté ou non alimenté, dans lequel le démarrage alimenté signifie que du carburant est introduit et enflammé au moins temporairement dans le moteur à combustion interne pendant le temps de remorquage ; et le démarrage non alimenté signifie que le moteur à combustion interne est tout d'abord remorqué pendant le temps de remorquage à une vitesse de rotation définie, et du carburant est introduit et enflammé seulement après.

2. Procédé selon la revendication 1, **caractérisé en ce que** la quantité de chaleur est déterminée à partir d'au moins l'une des grandeurs suivantes : la durée du temps de remorquage, le couple d'embrayage de consigne, une différence de vitesse de rotation entre une vitesse de rotation de l'arbre d'entraînement (19) et une vitesse de rotation de l'arbre de machine (17), une pression de carburant, un gradient de vitesse de rotation prédit de la vitesse de rotation de l'arbre d'entraînement (19) pendant le démarrage et le mode de démarrage du moteur à combustion interne (3).

3. Procédé selon l'une quelconque des revendications précédentes, **caractérisé en ce que**, pour réduire la quantité de chaleur qui devrait s'accumuler, une des grandeurs suivantes est adaptée en plus : la différence de vitesse de rotation entre la vitesse de rotation de l'arbre d'entraînement (19) et la vitesse de rotation de l'arbre de machine, la pression de carburant et le gradient de vitesse de rotation prédit de la vitesse de rotation de l'arbre d'entraînement (19) pendant le démarrage.

4. Procédé selon l'une quelconque des revendications précédentes, **caractérisé en ce que**, pour réduire la quantité de chaleur qui devrait s'accumuler, la différence de vitesse de rotation est réduite à une vitesse de rotation limite par une limitation de la vitesse de rotation de l'arbre de machine (17).

5. Procédé selon l'une quelconque des revendications précédentes, **caractérisé en ce que** la vitesse de rotation limite est déterminée au moyen d'au moins l'une des grandeurs suivantes : le couple d'embrayage de consigne, une température, une position angulaire d'un vilebrequin du moteur à combustion interne, la durée du temps de remorquage, un état de synchronisation du moteur à combustion interne (3) et la pression de carburant.

6. Procédé selon l'une quelconque des revendications précédentes, **caractérisé en ce que**, pour réduire la quantité de chaleur qui devrait s'accumuler, le gradient de vitesse de rotation de la vitesse de rotation de l'arbre d'entraînement (19) est augmenté par une augmentation du couple d'embrayage de consigne et/ou par une réduction de la durée du temps de remorquage.

7. Procédé selon l'une quelconque des revendications précédentes, **caractérisé en ce que**, pour réduire la quantité de chaleur qui devrait s'accumuler, un mode de démarrage déterminé est sélectionné parmi plusieurs modes de démarrage et est appliqué pour le démarrage du moteur à combustion interne (3).

8. Procédé selon l'une quelconque des revendications précédentes, **caractérisé en ce que** les modes de démarrage utilisés sont un démarrage par glissement non alimenté, un démarrage par remorquage non alimenté, un démarrage par glissement alimenté et/ou un démarrage par remorquage alimenté.

9. Dispositif d'entraînement (2) pour un véhicule automobile, en particulier pour la réalisation du procédé selon une ou plusieurs des revendications précédentes, dans lequel le dispositif d'entraînement (2) comporte un moteur à combustion interne (3) et une machine électrique (4), et un arbre d'entraînement (19) du moteur à combustion interne (3) peut être couplé au moyen d'un embrayage (18) à un arbre de machine (17) de la machine électrique (4), dans lequel l'embrayage (18), pour le démarrage du moteur à combustion interne (3), peut être réglé pendant un temps de remorquage sur un couple d'embrayage de consigne, dans lequel le dispositif d'entraînement (2) est conçu de manière à prédire, avant le démarrage, une quantité de chaleur qui devrait s'accumuler dans l'embrayage (18) pendant le démarrage et, lorsqu'une valeur limite est dépassée par la quantité de chaleur prédite, à sélectionner au moins un paramètre de fonctionnement influençant le démarrage du dispositif d'entraînement (2) de telle sorte que la quantité de chaleur qui devrait s'accumuler est réduite, dans lequel le couple d'embrayage de consigne est utilisé en tant que paramètre de fonctionnement influençant le démarrage du dispositif d'entraînement (1), dans lequel, pour réduire la quantité de chaleur qui devrait s'accumuler, une durée du temps de remorquage est réduite par une augmentation du couple d'embrayage de consigne, **caractérisé en ce qu'**un mode de démarrage du moteur à combustion interne (3) est de plus adapté pour réduire la quantité de chaleur qui devrait s'accumuler, dans lequel le mode de démarrage décrit si le démarrage du moteur à combustion interne (3) a lieu en étant alimenté ou non alimenté, dans lequel le démarrage alimenté signifie que du carburant est introduit et enflammé au moins temporairement dans le moteur à combustion interne pendant le temps de remorquage ; et le démarrage non alimenté signifie que le moteur à combustion interne est tout d'abord remorqué pendant le temps de remorquage à une vitesse de rotation définie, et du carburant est introduit et enflammé seulement après.
